# EUROPEAN PATENT APPLICATION

(11) **EP 2 325 535 A1**
(43) Date of publication of application: **25.05.2011**
(21) Application number: 10191964.5
(22) Date of filing: 19.11.2010
(51) Int. Cl.: F16L 23/036, F16L 23/04

(54) **Coupling for metal containers and/or pressurised pipes**

(30) Priority: 19.11.2009 IT VR20090198
(71) Applicant: Alteco S.r.l., 37020 Grezzana (VR) (IT)
(72) Inventor: Albrigi, Massimo, 37020 Stallavena (VR) (IT)
(74) Representative: Sandri, Sandro

(57) **Abstract**

A closing system for metal containers and/or pressurised pipes, such as generally cylindrical containers or tanks for the filtering of products of various kinds, which foresees the machining of the circular coupling edge of each of the two half-parts (10, 11), one upper and one lower, which make up the container and the use of locking elements consisting of ring type closing elements (12), or brackets (13) appropriately shaped and coupled permanently at the free ends of each element.

## Description

### TECHNICAL FIELD

This invention concerns a closing or joining system for containers and pressurised pipes, such as containers or tanks with a generally cylindrical shape for housing and/or filtering products used in the industrial sector, such as for paints, resins, solvents and also water and liquids in general, and also for pipes in general.

More specifically, this invention refers to a system that makes it possible to close metal containers and/or pressurised pipes through the use of particular fixing elements that make it possible to join the two half-parts that form the containers and to lock them together so as to form a pressure seal for the container.

The coupling system according to the invention is achieved by deforming the cylindrical surface of each of the two half-parts to form a toroidal surface which, in cross-section, can be shaped like a curl.

The particular geometry of the deformation means that the resistance of the material to external stress is considerably increased.

A particular shaped clamp is used for the correct positioning and sealing grip between the toroidal elements, ensuring the centering or pre-alignment of the axes of the components to be joined.

This invention can be applied in the sector of pressurised containers for liquids, typically metal containers and/or pressurised pipes, such as containers or tanks for filtering liquid food products such as wine or the like, or for other uses also in the industrial sector.

### BACKGROUND ART

It is known that in various industrial and civil sectors filtering systems are used so as to allow the separation of liquids with different compositions used in many applications, such as paints, resins, solvents and even water.

These filtering systems generally consist of an outer casing or container normally made from metal, which must necessarily have a very solid structure able to resist even very high pressure levels, since the liquid to be filtered through the filter, positioned inside the container and generally the cartridge type, is under pressure.

These containers or tanks are generally cylindrical and are made from extremely resistant material, such as stainless steel. To increase the pressure seal guarantee, the cylindrical body of these containers consists of two specular half-parts joined and held together at their points of contact, that is to say their circular edge.

The two half-parts forming the container are normally joined together by a flange type closing system whose two contact parts are locked together by the use of specific clamps or bolts.

Flange joining systems are also used in other solutions, such as for example the typical case of pipes.

The use of these systems has revealed some problems which will be described below.

The flange closing system involves the application of appropriate flanges on the contact edge of each of the two half-parts to be joined together, and the application of these flanges is carried out by welding the flanges on the edge of each half-part.

Traditional flanges consist of rings cut from solid pieces and turned to measure, therefore with a coupling system that is notoriously cumbersome, expensive to produce and not easy to use.

As regards the clamps holding the flanged parts together, various solutions have been known for some time, including the one devised by Teconnex with the patent EP 1.840.439. This clamp is the hose clamp type which allows turbocompressors to be joined to discharge conduits, this being a typical use in the vehicle drive sector and for non-pressurised seals.

The patent in question, being part of the background art, describes a clamp which envisages the presence of a fixed hinge and the presence of an elastic element to facilitate assembly of the clamp.

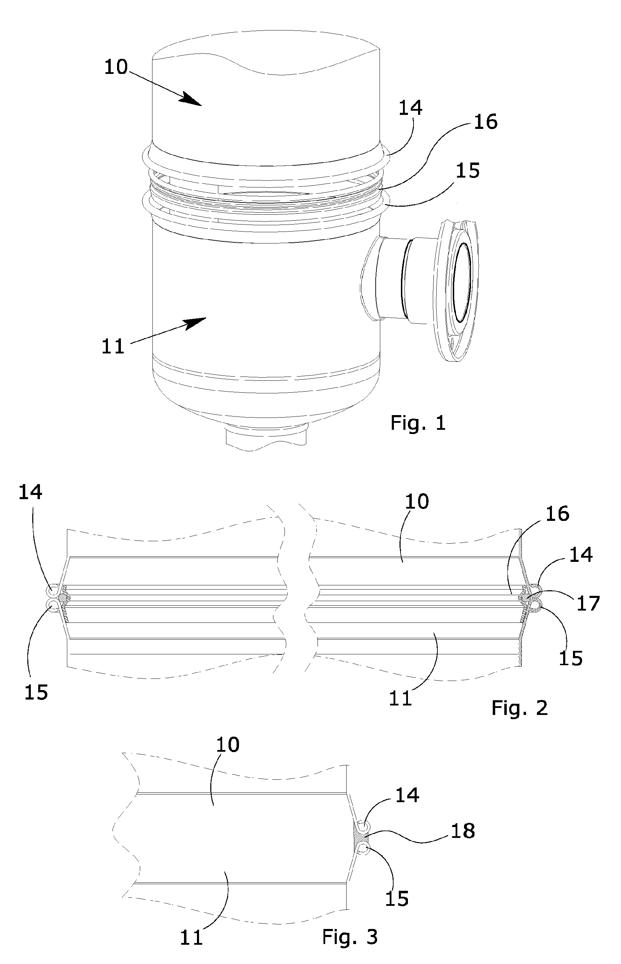

This background art clamp also envisages the use of a small support bracket ("link plate" part. 38 fig. 1) which, once fixed/welded to the exhaust manifold, should make it easier for the operator to assemble/dismantle the piece.

This clamp presents the drawback of not being fully openable, for example if it should be necessary to lock very large flanges, or in the event of large overall dimensions.

In addition, the traditional clamp is constructed using a series of components that are assembled to provide the finished object. This production system is extremely expensive and involves manual or automatic assembly of the pieces, having a considerable impact on the price of the finished product.

According to the traditional production method, assembly by welding being the system most commonly used, there is an increase in risk due to the intrinsic defects of this technology; since the components in question involve the safety of pressurised containers or pipes, these defects are an extremely important aspect.

### DESCRIPTION OF THE INVENTION

This invention proposes to provide a closing system for metal containers and/or pressurised pipes, such as generally cylindrical containers or tanks for filtering products of various kinds, which is able to eliminate or at least reduce the drawbacks described above.

The invention also proposes to provide a closing system for metal containers and/or pressurised pipes which is simple to produce and which envisages the use of components, both relative to the container and to the clamp, produced by simple pressing of folded sheet metal obtaining also single-piece components.

This is achieved by means of a closing system for metal containers and/or pressurised pipes, the features of which are described in the main claim.

The dependent claims of the solution in question describe advantageous embodiments of the invention.

The main advantages of this solution, in addition to those deriving from its construction simplicity, concern first of all the fact that the flanging of the two container half-parts to be matched is achieved by deforming a cylindrical surface to form a toroidal surface which, in cross-section, can have the shape of a curl.

The particular geometry of the deformation means that the resistance of the material to external stress is considerably increased.

To guarantee the correct positioning between the various toroidal elements, a shaped clamp is fixed to one of the two half-parts, this clamp being able to ensure the perfect centering, that is to say a pre-alignment, of the axes of the components to be coupled.

This clamp also allows the insertion of a gasket in appropriate material which, during locking of the closing system, is appropriately compressed to allow pressure sealing.

Another solution that makes it possible to align and seal the two parts is the insertion between the two faces of a gasket shaped in such a way as to perform these two functions.

It is also foreseen that these two half-parts, flanged as described above, are locked together in a first case by means of a "C" shaped clamp consisting of the assembly of similar or identical arc-shaped elements, produced by plastic deformation, or, according to another embodiment, by means of a bolted system consisting of appropriately shaped brackets, permanently joined at the free ends of each element.

If shaped brackets are used, these brackets face each other when the container is closed, creating a space designed to house a bolt, where the transmission of the locking force is allowed by an appropriately shaped transverse element which transmits the load of the bolt to the brackets.

A particular feature of the locking system according to the invention is the shape of the brackets and of the transverse element forming the closing elements.

This system was designed to make use of the synergies deriving from the simultaneous use of a bolt, an element that expresses maximum mechanical tensile strength with minimal use of resources, and the edge of the curl, an element which, albeit with some limitations, can in most cases replace the welded flanges. Added to this is the practicality of a "swing-bolt" or "rathmann" type of closing in which it is not necessary to fully unscrew the nut from the bolt in order to release the elements.

### DESCRIPTION OF THE DRAWINGS

Other features and advantages of the invention will become clear on reading the description given below of one embodiment of the invention, provided as a non-binding example, with the help of the accompanying drawings in which:
- figure 1 is a schematic and prospective view of the two half-parts which form the container to be assembled with the means according to the invention overall;
- figure 2 is a detailed front view of the two parts of the container which must be reciprocally locked using the first gasket system;
- figure 3 is a detailed cross-section view of the two parts of the container which must be reciprocally locked using the second gasket system;
- figure 4 is a schematic and prospective view of a first closing element of the shaped clamp type;
- figures 5 and 6 are detailed views of the aforesaid first closing element of the shaped clamp type;

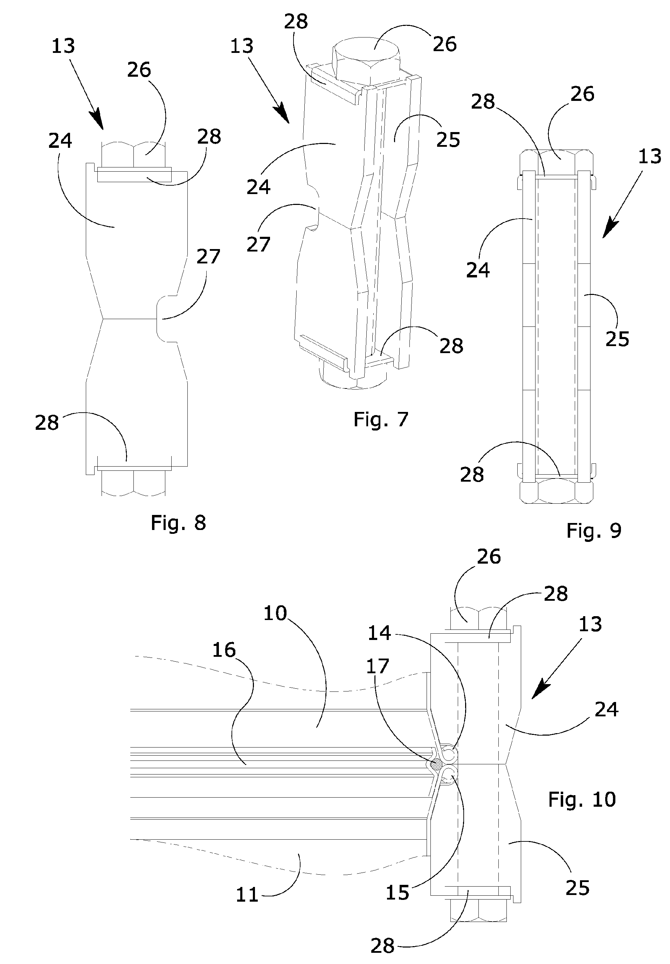

- figures 7 to 10 are schematic views showing the alternative bolted system consisting of appropriately shaped brackets permanently joined at the free ends of each element;
- figures 11 to 14 are schematic views showing a possible variation which envisages the insertion of a spring in the joint which acts as a hinge during the opening of the clamp to spread the two flanges apart.

### DESCRIPTION OF ONE EMBODIMENT OF THE INVENTION

With reference to the accompanying figures, the closing system according to the invention for metal containers and metal pressurised pipes, such as generally cylindrical containers or tanks for holding pressurised liquids, envisages the machining of the circular coupling edge of each of the two half-parts 10 and 11, one upper and one lower, which make up the container, and the use of locking elements in a first case consisting of ring type closing elements 12, and in a second case consisting of brackets 13 appropriately shaped and coupled permanently at the free ends of each element.

The coupling system of each of the two half-parts 10 and 11 which make up the container is achieved by mechanically deforming the edge of each cylindrical surface in order to form a toroidal surface which, in cross-section, presents the shape of a curl.

The two toroidal surfaces which face each other on the two half-parts 10 and 11 are respectively indicated with 14 and 15.

The particular geometry of the deformation which forms the toroidal surfaces 14 and 15 means that the resistance of the material to external stress is considerably increased.

For the correct positioning between the various toroidal elements, a shaped clamp 16 is fixed to one of the two half-parts, for example the lower one 11, ensuring centering, that is to say a pre-alignment of the axes of the components to be joined.

In cross-section, this shaped clamp 16 resembles a "W", allowing the insertion of a gasket 17 in appropriate material which, during locking of the closing system, is appropriately compressed to allow pressure sealing.

According to another embodiment shown in figure 3, to replace the shaped clamp 16 / gasket 17 combination, a shaped gasket 18 is used to join and seal the two flanges 14 and 15, simultaneously ensuring centering and pressure sealing between the flanged edges of the two half-parts.

It is possible to note that the elements which are joined together and which are plastically deformed to form a curl do in fact produce a flange closing system that is extremely resistant and economic.

The increase in resistance due to the hardening of the material as a result of the plastic deformation is in fact fully exploited here.

This particular type of mechanical coupling between the flanged edges 14 and 15 of the two half-parts 10 and 11, which match each other perfectly, must be clamped by appropriate locking means.

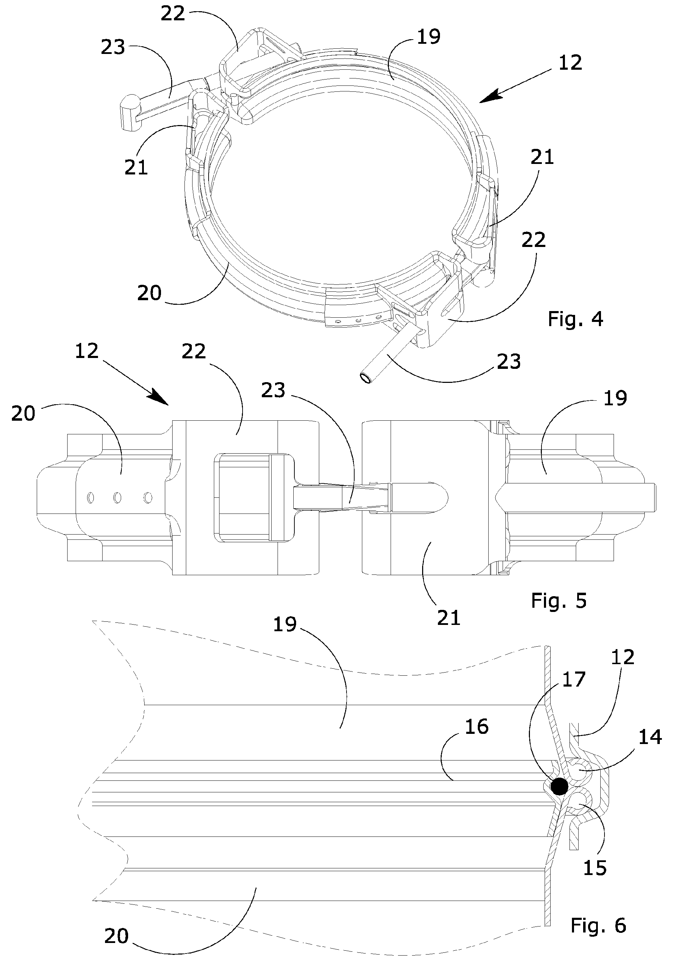

With reference first of all to figures 4 to 6, to achieve the locking system of the two half-parts 10 and 11 at their flanged edges 14 and 15, and obtain a sealed coupling that can counter the internal pressure, a "C" shaped locking clamp 12 is used, consisting of the assembly of two single arc-shaped, substantially specular and semicircular elements 19 and 20, formed by plastic deformation.

The ends of each element are provided with cage-like housings 21 and 22 which accommodate the closing hook 23.

The cross-section of the arc is substantially "C" shaped, so that the reciprocal coupling of the two components allows them to remain in contact by application of a force acting on the plane of the gasket.

The application of this force is guaranteed by the closing hook 23. In the case in question, this is a substantially "T" shaped threaded pin associated with a nut which, acting simultaneously on the housings 21 and 22 in the ends of the arcs, connects the various elements making up the clamp and, at the same time, adequately compresses the curl-like flanged elements 14 and 15 which are coupled together. The clamp is opened by loosening the locking nut screwed onto the threaded pin 23.

The main jaw-like element which forms the clamp 12, including the housings 22 and 23 at its ends, which are part of the closing system, is cut from a single piece of sheet metal by cold pressing.

The housings 21 and 22 at the ends of the arcs are shaped in such a way as to combine two functions, that is to say as part of a rotation hinge between the two arcs and as part of the rapid opening and closing system of the clamp itself.

The housings at the ends of the arcs also serve to increase the resistance of the cross-section to stress.

The "T" shaped threaded pin or tie rod 23 was designed to serve the dual purpose of a rotation pin between the two arcs and of a coupling and locking element of the system.

The "T" shaped tie rod 23 was also designed in such a way that the coupling operation can only be carried out when the tie rod is in a particular position.

In addition, the overall clamp 12 was designed in such a way that the release of the closing system and, if necessary, its dismantling, can only be carried out when there is no pressure inside the container that it closes, a fundamental feature for its safe use: it is in fact known that being able to open a flanged system that closes a container with a certain residual pressure inside it is dangerous.

It should be noted that the housing of the tie rod 23 is formed directly by pressing, from the same material making up the arcs 19 and 20. This therefore provides a continuous and functional integrated unit which couples the elements to be joined together forming the closing system of the clamp 12, which, by locking the tie rods 23, compresses the curls 14 and 15 of the container components.

According to another embodiment, the joining and locking of the flanged edges 14 and 15 of the two half-parts 10 and 11, which match each other perfectly, is achieved by a plurality of brackets 13 appropriately shaped and joined permanently at the free ends of each element or half-part.

Each bracket 13 consists of two symmetrical and specular bodies 24 and 25 which remain locked together and can be reciprocally tensioned by means of a bolt 26. At the midway junction point, the two brackets form a housing 27 which forms the clamp in which the two flanged edges 14 and 15 of the two half-parts are inserted.

When the container is closed, the brackets 13 face each other, creating a space designed to perfectly house the bolt 26. The transmission of the locking force is allowed by an appropriately shaped transverse element 28 which transmits the load of the bolt to the brackets.

A particular feature of this system is the shape of the brackets and of the transverse element 28 which, together with the bolt 26, forms an integrated and functional unit designed to counter the pressure inside the container.

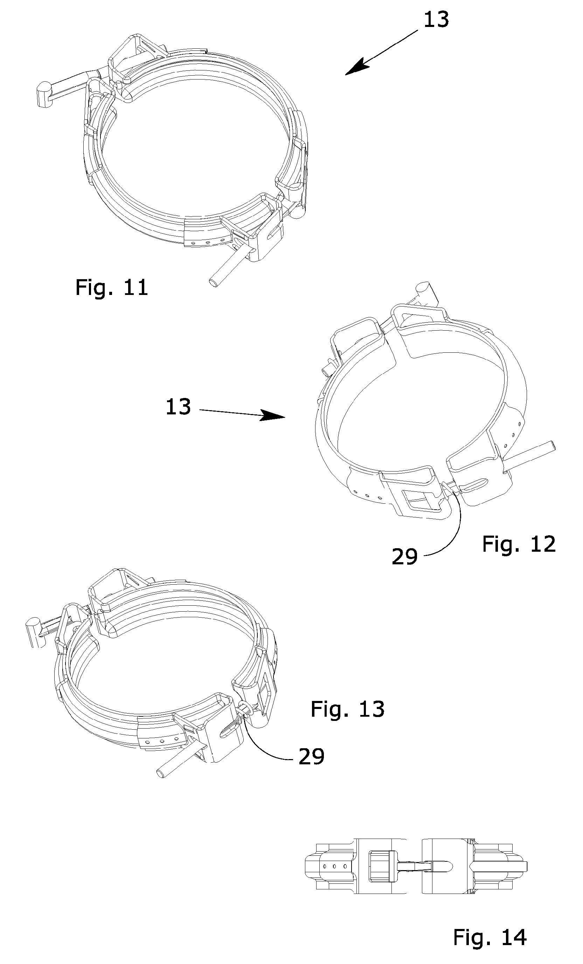

According to another element shown in figures 11 to 14, a spring 29 is inserted in the joint which acts as a hinge during the opening of the clamp in order to spread the two flanges apart.

During opening of the clamp, the spring prevents the ends of the sectors of the coupling, which remains restrained and which acts as a hinge, from moving towards each other, thus preventing the release of the "T" bar head from its housing and the consequent undesired release of the sectors.

The invention is described above with reference to a preferred embodiment. It is nevertheless clear that the invention is susceptible to numerous variations which lie within the scope of its disclosure, in the framework of technical equivalents.

## Claims

1. A closing system for metal containers and/or pressurised pipes, such as generally cylindrical containers or tanks for the filtering of products of various kinds, **characterised in that** it foresees the machining of the circular coupling edge of each of the two half-parts (10, 11), one upper and one lower, which make up the container and the use of locking elements consisting of ring type closing elements (12), or brackets (13) appropriately shaped and coupled permanently at the free ends of each element.

2. A closing system for metal containers and/or pressurised pipes according to the foregoing claim, **characterised in that** the coupling of each of the two half-parts (10, 11) which make up the container is achieved by mechanically plastically deforming the edge of each cylindrical surface in order to form a toroidal surface which, in cross-section, presents the shape of a curl (14, 15).

3. A closing system for metal containers and/or pressurised pipes according to either of the foregoing claims, **characterised in that**, for the correct positioning between the various toroidal elements, a shaped clamp (16) is fixed to one of the two half-parts, for example the lower one (11), ensuring centering, that is to say a pre-alignment of the axes of the components to be joined.

4. A closing system for metal containers and/or pressurised pipes according to any of the foregoing claims, **characterised in that** the shaped clamp (16) substantially presents a "W" shape in cross-section, allowing the insertion of a gasket (17) in appropriate material which, during locking of the closing system, is appropriately compressed to allow pressure sealing.

5. A closing system for metal containers and/or pressurised pipes according to any of the foregoing claims, **characterised in that**, to join and seal two flanges (14, 15), a shaped gasket (18) is used to simultaneously ensure centering and pressure sealing between the flanged edges of the two half-parts.

6. A closing system for metal containers and/or pressurised pipes according to any of the foregoing claims, **characterised in that** the locking system of the two half-parts (10, 11) at their flanged edges (14, 15) is achieved with a "C" shaped clamp (12), consisting of the assembly of two single arc-shaped, substantially specular and semicircular units (19 20), formed by plastic deformation.

7. A closing system for metal containers and/or pressurised pipes according to any of the foregoing claims, **characterised in that** the ends of each arc are provided with cage-like housings (21, 22) which accommodate the closing hook (23).

8. A closing system for metal containers and/or pressurised pipes according to any of the foregoing claims, **characterised in that** the joining and locking of the flanged edges (14, 15) of the two half-parts (10, 11), which match each other perfectly, is achieved by a plurality of brackets (13) appropriately shaped and joined permanently at the free ends of each element or half-part.

9. A closing system for metal containers and/or pressurised pipes according to any of the foregoing claims, **characterised in that** each bracket (13) consists of two symmetrical and specular bodies (24, 25) which remain locked together and can be reciprocally tensioned by means of a bolt (26), and **in that** at the midway junction point, the two brackets form a housing (27) which forms the clamp in which the two flanged edges (14, 15) of the two half-parts are inserted.

10. A closing system for metal containers and/or pressurised pipes according to any of the foregoing claims, **characterised in that** the brackets (13) face each other, creating a space designed to perfectly house the bolt (26), where the transmission of the locking force is allowed by an appropriately shaped transverse element (28) which transmits the load of the bolt to the brackets, and **characterised in that** the shape of the brackets and of the transverse element (28), forms, together with the bolt 26, an integrated and functional unit designed to counter the pressure inside the container.

11. A closing system for metal containers and/or pressurised pipes according to any of the foregoing claims, **characterised in that** it foresees the insertion of a spring (29) in the joint which acts as a hinge during the opening of the clamp in order to spread the two flanges apart.
